# EUROPÄISCHE PATENTSCHRIFT

(11) **EP 2 615 351 B1**
(45) Veröffentlichungstag und Bekanntmachung des Hinweises auf die Patenterteilung: **14.09.2016**
(21) Anmeldenummer: 12156645.9
(22) Anmeldetag: 23.02.2012
(51) Int. Cl.: F16L 59/14, F16L 59/16, F16L 59/02

(54) **Vorrichtung zur Kältedämmung**
Cold insulation device
Dispositif d'isolation frigorifique

(30) Priorität: 18.11.2011 DE 202011108044 U
(43) Veröffentlichungstag der Anmeldung: 17.07.2013
(73) Patentinhaber: GWK Kuhlmann GmbH, 33154 Salzkotten (DE)
(72) Erfinder: Kuhlmann, Fred, 33154 Verne (DE)
(74) Vertreter: Ostermann, Thomas

(56) Entgegenhaltungen:
- EP-A1- 0 564 765
- EP-A2- 2 302 277
- WO-A1-00/25058
- GB-A- 2 296 749

## Beschreibung

Die Erfindung betrifft eine Vorrichtung zur Kältedämmung von fluidführenden Gegenständen, nach dem Oberbegriff des Patentanspruches 1.

Aus der DE 10 2007 002 713 U1 ist eine Vorrichtung für eine Isolierung von Armaturen, Geräten oder Rohrleitungen bekannt, die zum einen einen nachgiebigen Isolierkörper und zum anderen einen denselben umgebenden dünnwandigen Schalenkörper aufweist. Die Armatur wird jeweils von zwei Hälften von Isolierkörpern und Schalenkörpern umgeben, wobei die Schalenkörperhälften endseitig über einen Druckspanner so zusammengehalten werden, dass eine flächige Presskraft von den Isolierkörpern auf die Armaturenoberfläche ausgeübt wird. Durch die flächige Presskraft soll verhindert werden, dass Feuchtigkeit aus der Umgebungsluft an die Armaturenoberfläche gelangt und es dort zu einer Kondensatbildung kommt. Nachteilig an der bekannten Vorrichtung ist, dass die Druckspanner eine relativ hohe Presskraft aufbringen müssen, um ein Eindringen von Feuchtigkeit an der Nahtstelle zwischen den Hälften der Isolier- und Schalenkörper zu verhindern. Insbesondere wenn die Spannkraft des Druckspanners abnimmt, besteht die Gefahr, dass die Diffusionsdichtigkeit nicht mehr gegeben ist.

Aus der WO 00/25058 A1 ist eine Vorrichtung zur Kältedämmung von fluidführenden Gegenständen bekannt. Die Vorrichtung umfasst einen nachgiebigen Dämmkörper sowie einen denselben umgebenden dünnwandigen Schalenkörper. Der aus halbschalenförmigen Dämmkörperteilen bestehende Dämmkörper und der aus halbschalenförmigen Schalenkörperteilen bestehende Schalenkörper weisen zueinander fluchtende Erhebungen bzw. Vertiefungen auf. Hierdurch wird eine längsseitige Dichtigkeit der Vorrichtung gewährleistet.

Aus der EP 2 302 277 A2 ist eine Vorrichtung zur Kältedämmung von fluidführenden Gegenständen bekannt, bei der Dämmkörper winklig zueinander angeordnet sind. Halbschalen der Dämmkörper sind identisch mit Nuten und Federn an ihren Schmalseiten ausgebildet, sodass stets eine formschlüssige Verbindung gewährleistet ist.

Aus der EP 0 564 765 A1 ist eine Vorrichtung zur Kältedämmung von fluidführenden Gegenständen bekannt, die halbschalenförmige Schalenkörperteile sowie halbschalenförmige Dämmkörperteile aufweist. Die Schalenkörperteile weisen jeweils einen Randflansch auf, der in radialer Richtung abragt. Die Dämmkörperteile sind bündig zu dem Randflansch des Schalenkörperteils angeordnet. Zur dichten Festlegung weisen die Randflansche Bohrungen für eine Schraubverbindung auf.

Aufgabe der vorliegenden Erfindung ist es daher, eine Vorrichtung zur Kältedämmung von Armaturen und Rohrleitungen derart weiterzubilden, dass langzeitstabil eine effektive Diffusionsdichtigkeit von Armaturen, Rohrleitungen und dergleichen gewährleistet ist.

Zur Lösung der Aufgabe weist die Erfindung die Merkmale des Patentanspruches 1 auf.

Der besondere Vorteil der Erfindung besteht darin, dass durch linienförmige Erhebungen und/oder Vertiefungen an einer Schmalseite und/oder an einer Innenfläche eines Dämmkörpers eine linienförmige Dichtverstärkung erzeugt wird, mittels derer eine diffusionsdichte Anlage des Dämmkörpers an einem fluidführenden Gegenstand gewährleistet ist. Grundgedanke der Erfindung ist es, durch linienförmige Ausbuchtungen vorzugsweise im Randbereich des Dämmkörpers bzw. der Dämmkörperhälften eine sichere und dauerhafte Dichtverbindung herzustellen, so dass die von dem Fixiermittel aufzubringende Presskraft beschränkt sein kann.

Nach der Erfindung ist ein erster und/oder zweiter Dämmkörperteil des Dämmkörpers im Vergleich zu einem ersten und/oder zweiten Schalenkörperteil des Schalenkörpers so überdimensioniert ausgebildet, dass sich im montierten Zustand an einer Nahtstelle zwischen den Schalenkörperteilen eine Dichtlippe der Dämmkörperteile zwischen den zueinander gekehrten Kanten der Schalenkörperteile erhebt. Diese Dichtlippe erstreckt sich in einem Bereich zwischen den Kanten der Schalenkörperteile und/oder zusätzlich radial nach außen abragend über die Mantelfläche des Schalenkörpers hinaus. Es bildet sich somit ein abstehender Kragen, der sich entlang der Naht des Schalenkörpers erstreckt. Hierdurch kann die Diffusionsdichtigkeit weiter gefördert werden.

Nach einer bevorzugten Ausführungsform der Erfindung weist eine Innenseite des Dämmkörpers eine ringförmige Wulst auf, die sich koaxial zu dem fluidführenden Gegenstand erstreckt und dichtend gegen diesen drückt. Diese ringförmige Wulst erstreckt sich konturenangepasst an den fluidführenden Gegenstand.

Nach einer weiteren Ausführungsform der Erfindung weisen der erste Dämmkörperteil und der zweite Dämmkörperteil an einer Schmalseite eine Nut und/oder einen linienförmigen Vorsprung auf, so dass die Dämmkörperteile nach einer Feder-Nut-Verbindung randseitig ineinandergreifen und eine diffusionsdichte Verbindung schaffen, wenn über ein entsprechendes Fixiermittel die Dämmkörperteile zusammengehalten werden.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: eine perspektivische Darstellung einer Armatur mit einem diese umgebenden nachgiebigen Dämmkörper und einem diesem umgebenden dünnwandigem Schalenkörper,
- Figur 2: eine Seitenansicht einer Hälfte des Dämmkörpers,
- Figur 3: eine vergrößerte Darstellung einer Einzelheit X in Figur 2,
- Figur 4: eine perspektivische Darstellung eines ersten Dämmkörperteils (Dämmkörperhälfte) und
- Figur 5: eine perspektivische Darstellung eines ersten Schalenkörperteils (Schalenkörperhälfte).

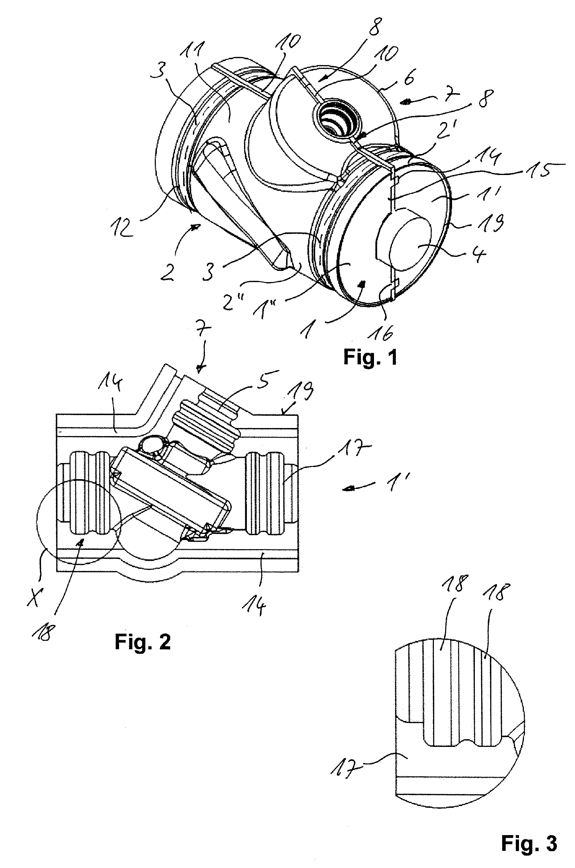

Eine Vorrichtung zur Kältedämmung von fluidführenden Gegenständen besteht im Wesentlichen aus einem nachgiebigen Dämmkörper 1 und einem dünnwandigen Schalenkörper 2, die über schematisch dargestellte Fixiermittel 3, die als Strangregulierventil ausgebildete Armatur vollständig umfangseitig umgeben. In Figur 1 ist ein Rohrstück 4 des Strangregulierventils dargestellt. Alternativ ist die Kältedämmvorrichtung auch für andere Armaturen, Rohrleitungen und dergleichen einsetzbar.

Der nachgiebige Dämmkörper 1 besteht aus einem diffusionsdichten Dämmschaummaterial. Der Dämmkörper 1 ist hälftig ausgebildet, wobei er zusammengesetzt wird durch ein erstes Dämmkörperteil 1' und ein zweites Dämmkörperteil 1''.

Der Schalenkörper 2, der aus einem starren bzw. steifen Kunststoffmaterial besteht, ist ebenfalls hälftig ausbildet mit einem ersten Schalenkörperteil 2' und einem zweiten Schalenkörperteil 2''. Die Dämmkörperhälften 1', 1'' und die Schalenkörperhälften 2', 2'' sind an die Kontur der Armatur angepasst. So weisen die Dämmkörperhälften 1', 1'' und die Schalenkörperhälften 2', 2'' jeweils Ausbuchtungen 5 bzw. 6 auf zum Umfassen eines Anschlusses 7 der Armatur für einen Stellmotor.

In der Montageposition umgreift die erste Schalenkörperhälfte 2' die erste Dämmkörperhälfte 1' bzw. die Schalenkörperhälfte 2'' die zweite Dämmkörperhälfte 1'', wobei die Schalenkörperhälften 2', 2'' flächig auf eine Mantelfläche 19 der Dämmkörperhälften 1', 1'' anliegen. Es bildet sich eine Nahtstelle 8 zwischen zueinander gekehrten Kanten 9 der Schalenkörperhälften 2', 2'', wobei sich die Nahtstelle 8 entlang einer Längsmittelebene der Armatur erstreckt. Die Dämmkörperhälften 1', 1'' sind gegenüber den Schalenkörperhälften 2', 2'' überdimensioniert ausgebildet, so dass beim Aufsetzen der Schalenkörperhälften 2', 2'' auf die Armatur bereits Material der Dämmkörperhälften 1' bzw. 1'' zwischen die zueinander gekehrten Kanten 9 gedrückt wird zur Bildung einer Dichtlippe 10, die sich zwischen den Kanten 9 und vorzugsweise darüber hinaus von einer Mantelfläche 11 der Schalenkörperhälften 2, 2' erhaben erstreckt. Es bildet sich somit eine Materialanhäufung an der Nahtstelle 8, die eine verbesserte Dichtigkeit ermöglicht. Im montierten Zustand werden die Schalenkörperhälften 2', 2'' mittels der als Klemmbänder ausbildeten Fixiermittel 3 unter Anlage an der Dichtlippe 10 gegeneinander gedrückt.

Das Klemmband 3 wird an ringförmigen Befestigungsaufnahmen 12 der Schalenkörperhälften 2', 2'' angelegt, so dass beim Spannen derselben ein Verrutschen verhindert wird.

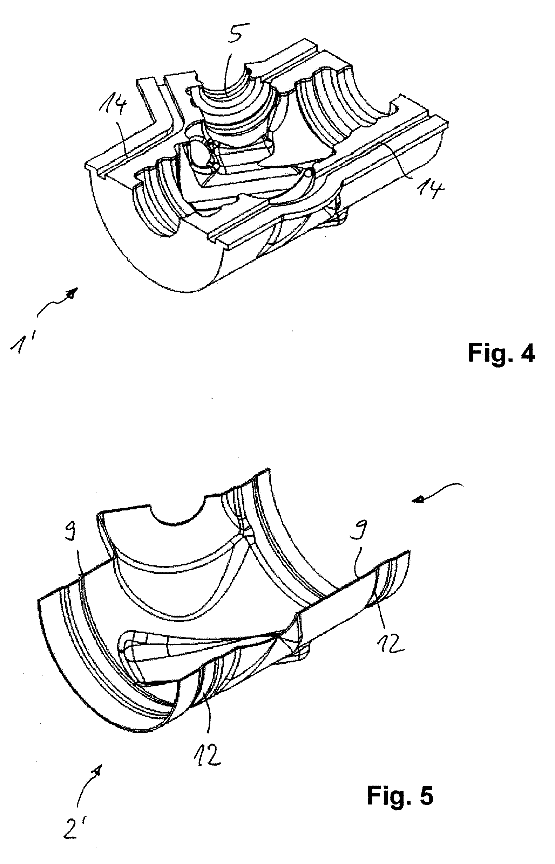

Aus Figur 4 ist ersichtlich, dass die erste Dämmkörperhälfte 1' an einer Schmalseite eine durchgehende Nut 14 aufweist. Die zweite Dämmkörperhälfte 1'' weist an ihrer Schmalseite 15 korrespondierende linienförmige Vorsprünge 16 auf, die in der Montageposition in die Nut 14 der ersten Dämmkörperhälfte 1' eingreifen. Es erfolgt somit in axialer Richtung eine linienförmige formschlüssige Verbindung zwischen dem ersten Dämmkörperteil 1' und dem zweiten Dämmkörperteil 1'', was die Dichtwirkung erhöht.

An einer Innenfläche 17 der Dämmkörperhälfte 1' bzw. 1'' sind ringförmige Wülste 18 angeordnet, die sich radial nach innen erheben und gegen eine Fläche der Armatur drücken. Die ringförmige Wulst 18 ist konturenangepasst zu der Armatur ausgebildet und ermöglicht zusammen mit den anderen Abschnitten der Innenfläche 17 der Dämmkörperhälften 1', 1'' eine flächige Anlage des Dämmkörpers 1 an der Mantelfläche der Armatur. Vorzugsweise ist die ringförmige Wulst 18 so erhaben ausgebildet, dass sie gegen die Mantelfläche der Armatur drückt. Sie bildet somit eine linienförmige Erhebung der Dämmkörperhälfte 1', 1''.

Die an beiden Stirnseiten der Armatur angeordneten Klemmbänder 3 üben eine linienförmige Presskraft auf die Schalenkörperhälfte 2, 2'' bzw. Dämmkörperhälfte 1, 1'' aus. Durch die formschlüssige Verbindung der Dämmkörperteile 1', 1'' und/oder der an der Naht 8 der Schalenkörperteile 2', 2'' angeordneten Dichtlippe und/oder der konturenfolgenden Ausbildung der ringförmigen Wülste 18 an der Innenseite 17 der Dämmkörperteile 1', 1'' wird eine kältedämmende und diffusionsdichte Abdichtung des fluidführenden Gegenstandes geschaffen, ohne dass eine flächenhafte Anpressung des Dämmkörpers 1 auf den fluidführenden Gegenstand ausgeübt werden müsste.

## Patentansprüche

1. Vorrichtung zur Kältedämmung von fluidführenden Gegenständen, wie Armaturen, Rohrleitungen und dergleichen, mit einem nachgiebigen Dämmkörper (1) und mit einem den Dämmkörper (1) umgebenden dünnwandigen Schalenkörper (2), wobei der Dämmkörper (1) mit einer Innenfläche (17) konturenangepasst an dem fluidführenden Gegenstand anliegt, wobei der Schalenkörper (2) über Fixiermittel (3) konturenangepasst eine Mantelfläche des Dämmkörpers (1) umhüllt, wobei der Dämmkörper (1) an einer Innenfläche (17) desselben und/oder an einer Schmalseite (13) desselben eine linienförmige Erhebung (16) und/oder eine linienförmige Vertiefung (14) aufweist, wobei der Dämmkörper (1) und der Schalenkörper (2) mehrteilig ausgebildet sind, wobei der Dämmkörper (1) einen ersten Dämmkörperteil (1') und einen zweiten Dämmkörperteil (1") einerseits und der Schalenkörper (2) einen ersten Schalenkörperteil (2') und einen zweiten Schalenkörperteil (2") andererseits aufweist, **dadurch gekennzeichnet, dass** der erste Dämmkörperteil (1') und/oder der zweite Dämmkörperteil (1") derart im Vergleich zu dem ersten Schalenkörperteil (2') und/oder dem zweiten Schalenkörperteil (2") überdimensioniert ausgebildet ist, dass sich im montierten Zustand zwischen zueinander gekehrten Kanten (9) des ersten und zweiten Schalenkörperteils (2', 2") eine Dichtlippe (10) des Dämmkörpers (1) ausbildet.

2. Vorrichtung zur Kältedämmung nach Anspruch 1 **dadurch gekennzeichnet, dass** das erste Dämmkörperteil (1') an seiner Schmalseite (13) eine durchgehende Nut (14) als die Vertiefung und das zweite Dämmkörperteil (1") an seiner Schmalseite (15) die linienförmige Erhebung aufweisen, die in dem montierten Zustand ineinandergreifen zur passgenauen Positionierung des ersten Dämmkörperteils (1') und des zweiten Dämmkörperteils (1 ").

3. Vorrichtung zur Kältedämmung nach Anspruch 1 oder 2, **dadurch gekennzeichnet, dass** das erste Dämmkörperteil (1') und das zweite Dämmkörperteil (1") jeweils als Dämmkörperhälften ausgebildet sind, wobei die Schmalseiten der Dämmkörperhälften (1', 1") jeweils in einer gemeinsamen Axialebene verlaufen.

4. Vorrichtung zur Kältedämmung nach einem der Ansprüche 1 bis 3, **dadurch gekennzeichnet, dass** sich von der Innenfläche (17) des ersten und/oder zweiten Dämmkörperteils (1', 1") eine ringförmige Wulst (18) erhebt, die zu dem fluidführenden Gegenstand konturenangepasst und/oder sich so weit erhebt, dass sie im montierten Zustand gegen eine Mantelfläche des fluidführenden Gegenstandes eine Druckkraft ausübt.

5. Vorrichtung zur Kältedämmung nach einem der Ansprüche 1 bis 4, **dadurch gekennzeichnet, dass** die Dichtlippe (10) erhaben zu einer Mantelfläche (11) des Schalenkörpers (2) verläuft.

6. Vorrichtung zur Kältedämmung nach einem der Ansprüche 1 bis 5, **dadurch gekennzeichnet, dass** der Schalenkörper (2) an stirnseitigen Enden eine ringförmige Aufnahme (12) aufweist zur linienförmigen Anlage des Fixiermittels (3).

7. Vorrichtung zur Kältedämmung nach einem der Ansprüche 1 bis 6, **dadurch gekennzeichnet, dass** das Fixiermittel (3) als ein Klemmband ausgebildet ist.

8. Vorrichtung zur Kältedämmung nach einem der Ansprüche 1 bis 7, **dadurch gekennzeichnet, dass** der Dämmkörper (1) aus einem kältedämmenden Schaumstoffmaterial und der Schalenkörper (2) aus einem starren Kunststoffmaterial besteht.

## Claims

1. A cold insulation device for fluid-carrying objects, such as armatures, pipes and the like, with a flexible insulating element (1) and with a thinwalled shell body (2) surrounding the insulating element (1), wherein the insulating element (1) bears with an inner surface (17) adapted to the contour on the fluid-carrying object,
wherein the shell body (2) encloses by means of fixing means (3) adjusted to the contour a casing surface of the insulating element (1), wherein the insulating element (1) on an inner surface (17) thereof and/or on a narrow side (13) thereof has a linear projection (16) and/or a linear depression (14),
wherein the insulating element (1) and the shell body (2) are designed as multiple parts,
wherein the insulating element (1) has a first insulating element part (1') and a second insulating element part (1") on the one hand and the shell body (2) has a first shell body part (2') and a second shell body part (2") on the other hand, **characterised in that** the first insulating element part (1') and/or the second insulating element part (1") are designed to be overdimensioned compared to the first shell body part (2') and/or the second shell body part (2"), such that in the assembled state between facing edges (9) of the first and second shell body part (2', 2") a sealing lip (10) of the insulating element (1) is formed.

2. The cold insulation device according to claim 1, **characterised in that** the first insulating element part (1') on its narrow side (13) has a continuous groove (14) as the depression and the second insulating element part (1") on its narrow side (15) has the linear projection, which engage with one another in the assembled state for the precise positioning of the first insulating element part (1') and the second insulating element part (1").

3. The cold insulation device according to claim 1 or 2, **characterised in that** the first insulating element part (1') and the second insulating element part (1") are each designed as insulating element halves, wherein the narrow sides of the insulating element halves (1', 1") run respectively in a common axial plane.

4. The cold insulation device according to any one of claims 1 to 3, **characterised in that** an annular protrusion (18) projects from the inner surface (17) of the first and/or second insulating element part (1', 1"), which protrusion projects to correspond with the contours of the fluid-carrying object and/or projects so far that in the assembled state it exerts a pressing force against a casing surface of the fluid-carrying object.

5. The cold insulation device according to any one of claims 1 to 4, **characterised in that** the sealing lip (10) is raised relative to a casing surface (11) of the shell body (2).

6. The cold insulation device according to any one of claims 1 to 5, **characterised in that** on its face ends the shell body (2) has an annular mount (12) for linearly supporting the fixing means (3).

7. The cold insulation device according to any one of claims 1 to 6, **characterised in that** the fixing means (3) is designed as a clamping band.

8. The cold insulation device according to any one of claims 1 to 7, **characterised in that** the insulating element (1) is made from a coldinsulating foam material and the shell body (2) is made from a rigid plastic material.

## Revendications

1. Dispositif d'isolation frigorifique d'objets conduisant des fluides, comme robinetterie, conduites tubulaires et analogues, avec un corps isolant (1) souple et un corps en coquille (2) à paroi fine, entourant le corps isolant (1), sachant que le corps isolant (1) porte, avec une face intérieure (17), de contour adapté, contre l'objet conduisant un fluide, que le corps en coquille (2) enveloppe, en contour adapté, une surface latérale du corps isolant (1), par l'intermédiaire d'un moyen de fixation (3), le corps isolant (1) présentant sur une face intérieure (17) de celui-ci et / ou sur un côté étroit (13) de celui-ci, une saillie (16) en forme de ligne et / ou une cavité (14) en forme de ligne, sachant que le corps isolant (1) et le corps en coquille (2) sont composés de plusieurs pièces, le corps isolant (1), d'une part, présentant un premier corps isolant (1') et un deuxième corps isolant (1") et le corps en coquille (2), d'autre part, présentant un premier corps en coquille (2') et un deuxième corps en coquille (2"), **caractérisé en ce que** le premier corps isolant (1') et / ou le deuxième corps isolant (1") sont surdimensionnés en comparaison avec le premier corps en coquille (2') et / ou le deuxième corps en coquille (2") de sorte qu'une lèvre d'étanchéité (10) du corps isolant (1) se forme, à l'état monté, entre des bords (9) du premier corps en coquille et du deuxième corps en coquille (2', 2") tournés l'un vers l'autre.

2. Dispositif d'isolation frigorifique selon la revendication 1, **caractérisé en ce que** le premier corps isolant (1') présente sur son côté étroit (13) une rainure continue (14) en tant que cavité et que le deuxième corps isolant (1") présente sur son côté étroit (15) la saillie en forme de ligne, qui, à l'état monté, s'engagent l'une dans l'autre pour positionner le premier corps isolant (1') et le deuxième corps isolant (1") en ajustage précis.

3. Dispositif d'isolation frigorifique selon revendication 1 ou 2, **caractérisé en ce que** le premier corps isolant (1') et le deuxième corps isolant (1") sont respectivement réalisés en tant que moitiés de corps isolant, sachant que les côtés étroits des moitiés de corps isolant (1', 1") s'étendent respectivement sur un plan axial commun.

4. Dispositif d'isolation frigorifique selon l'une des revendications 1 à 3, **caractérisé en ce que**, partant de la face intérieure (17) du premier corps isolant et / ou du deuxième corps isolant (1', 1''), s'élève un bourrelet en forme d'anneau (18) qui présente un contour adapté à l'objet conduisant un fluide et / ou monte si haut qu'il exerce, à l'état monté, une force de pression sur une surface latérale de l'objet conduisant un fluide.

5. Dispositif d'isolation frigorifique selon l'une des revendications 1 à 4, **caractérisé en ce que** la lèvre d'étanchéité (10) s'étend en relief par rapport à une surface latérale (11) du corps en coquille (2).

6. Dispositif d'isolation frigorifique selon l'une des revendications 1 à 5, **caractérisé en ce que** le corps en coquille (2) présente, à des extrémités frontales, un réceptacle en forme de bague (12) pour l'application du moyen de fixation (3).

7. Dispositif d'isolation frigorifique selon l'une des revendications 1 à 6, **caractérisé en ce que** le moyen de fixation (3) est réalisé en tant que bande adhésive.

8. Dispositif d'isolation frigorifique selon l'une des revendications 1 à 7, **caractérisé en ce que** le corps isolant (1) consiste en un matériau en mousse isolant frigorifique et que le corps en coquille (2) consiste en un matériau synthétique rigide.
